# EUROPEAN PATENT SPECIFICATION

(11) **EP 2 918 886 B1**
(45) Date of publication and mention of the grant of the patent: **03.04.2019**
(21) Application number: 13852792.4
(22) Date of filing: 10.09.2013
(51) Int. Cl.: F16L 47/24, F16B 31/02

(54) **PIPING JOINT**
ROHRLEITUNGSVERBINDUNG
RACCORD DE TUBULURE

(30) Priority: 08.11.2012 JP 2012246358
(43) Date of publication of application: 16.09.2015
(73) Proprietor: Bridgestone Corporation, Tokyo 104-8340 (JP)
(72) Inventor: IIZUKA, Tatsuro, Tokyo 104-8340 (JP)
(74) Representative: Oxley, Robin John George
(86) International application number: PCT/JP2013/074429
(87) International publication number: WO 2014/073263

(56) References cited:
- JP-A- 2007 040 431
- JP-A- 2009 115 192
- JP-A- 2011 094 648
- US-A1- 2010 148 496
- US-B1- 6 322 108

## Description

### Technical Field

The present invention relates to a pipe fitting.

### Background Art

In pipe fittings for coupling pipe bodies together, a pipe fitting with a resin tube and a metal tube that have been integrally molded together by insert molding is known. The metal tube and the resin tube separate from each other if excessive tightening torque is applied to such a pipe fitting, raising concerns regarding detrimental effects to the watertight performance of the pipe fitting.

A pipe connection structure described in Japanese Patent Application Laid-Open (JP-A) No. 2009-115192 is provided with a hexagonal portion on the outer peripheral face for gripping with a tool, and slits are formed that extend from each corner portion of the hexagonal portion to the radial direction inside. Metal tubes are anticipated to be employed with such a pipe connection structure, with the hexagonal portion rendered non-rotatable by crushing the corner portions of the hexagonal portion that have been weakened by the slits, and there is no mention regarding resin tubes.

Reference is also made to US 2010/0148496, which discloses a pipe fitting according to the preamble of Claim 1.

### SUMMARY OF INVENTION

### Technical Problem

The problem addressed by the present invention is the provision of pipe fittings capable of suppressing separation between metal tubes and resin tubes during pipe connection.

### Solution to Problem

In order to solve the above problem, a pipe fitting according to a first aspect of the present invention includes: a metal tube that is screwed into or onto a pipe body; a resin tube including one end portion that is configured connectable to another pipe body, and another end portion that is integrally molded together with the metal tube; and a first polygonal portion that is provided at an outer peripheral face of the resin tube, and that includes corner portions that deform at a lower torque than torque to separate the metal tube and the resin tube, wherein the first polygonal portion comprises a plurality of hexagonal ring shaped projections that project out from the outer peripheral face of the resin tube, that have the corner portions, and are provided at intervals along an axial direction; characterized in that a rib extends along the axial direction and connects the corner portions of the plurality of ring shaped projections.

The pipe fitting according to the first aspect of the present invention is formed by integrally molding the resin tube and the metal tube. This thereby enables pipe bodies of different materials to be coupled together, by fastening the metal tube by screwing into or onto a metal pipe body, and by connecting the resin tube to a resin pipe body.

Moreover, the first polygonal portion is formed to the outer peripheral face of the resin tube, and corner portions of the first polygonal portion deform at a lower torque than torque to separate the metal tube and the resin tube. Thus when torque is applied to the polygonal portion using a tool such as a spanner, due to corner portions of the polygonal portion deforming prior to reaching the torque to separate the metal tube and the resin tube, close contact faces between the metal tube and the resin tube are not affected, and water can be suppressed from leaking out from the close contact faces.

In the pipe fitting according to the first aspect of the present invention, the first polygonal portion includes the plural hexagonal ring shaped projections provided at intervals along the axial direction, and the corner portions of the plural ring shaped projections are coupled together by the rib that extends along the axial direction. The rib accordingly deforms when excessive torque is transmitted to the first polygonal portion, and the corner portions of the ring shaped projection become rounded, enabling the application of excessive torque to be suppressed.

A pipe fitting according to a second aspect of the present invention is the pipe fitting of the first aspect, wherein the rib is only formed to some of the corner portions of the ring shaped projections.

In the pipe fitting according to the second aspect of the present invention, the rib is only formed to some of the corner portions of the ring shaped projection. When integrally molding the pipe fitting using a mold, mold removal is difficult in cases in which the rib is formed to each corner portion of the ring shaped projections, unless the mold is divided into the number of sections arising by partitioning at the ribs. Namely, to mold an outer peripheral face having a hexagonal ring shaped projection the mold would need to be divided into six sections. In contrast thereto, for example, when ribs are formed only at two corner portion locations at opposite corners of a hexagonal shape, the contiguous faces not partitioned by the ribs can be removed from a single mold, enabling the ring shaped projections to be formed by a mold having only 2 sections.

A pipe fitting according to a third aspect of the present invention is the pipe fitting according to the first aspect or the second aspect, wherein a torque transmission means for transmitting torque with a tool is formed to the outer peripheral face of the resin tube and separately to the first polygonal portion.

In the pipe fitting according to the third aspect of the present invention, the torque transmission means is formed separately to the first polygonal portion. Thus even in cases in which the corner portions of the first polygonal portion of the pipe fitting connected to a pipe body have been deformed, torque can still be transmitted to the pipe fitting through the torque transmission means, enabling the pipe fitting to be removed from the pipe body, or refastened to the pipe body.

A pipe fitting according to a fourth aspect of the present invention is the pipe fitting described in the third aspect, wherein the torque transmission means is a second polygonal portion that is formed contiguously along the axial direction to the first polygonal portion, and the diameter of the circumscribed circle of the second polygonal portion is smaller than the diameter of the circumscribed circle of the first polygonal portion.

In the pipe fitting according to the fourth aspect of the present invention, the second polygonal portion is formed contiguously along the axial direction to the first polygonal portion, and the diameter of the circumscribed circle of the second polygonal portion is smaller than the diameter of the circumscribed circle of the first polygonal portion. Thereby, when gripping the first polygonal portion with a tool such as a spanner, the tool can be suppressed from contacting the second polygonal portion, enabling torque to be applied only to the first polygonal portion. Moreover, when removing the pipe fitting from a pipe body, unintentional deformation of the corner portions of the first polygonal portion is avoided by gripping only the second polygonal portion with a tool, such as a spanner.

A pipe fitting according to a fifth aspect of the present invention is the pipe fitting of any one of the first aspect the fourth aspect, wherein the metal tube and the resin tube are integrally formed by insert molding.

In the pipe fitting according to the fifth aspect of the present invention, the metal tube and the resin tube can be integrally molded by insert molding, thereby enabling easy manufacture of the pipe fitting.

### Advantageous Effects of Invention

In the present invention, due to the above configuration, a metal tube and a resin tube can be suppressed from separating during pipe connecting.

### BRIEF DESCRIPTION OF DRAWINGS

Fig. 1 is a perspective view of a pipe fitting according to a first exemplary embodiment of the present invention.
Fig. 2 is a half cutaway cross-section of a pipe fitting according to the first exemplary embodiment of the present invention, as viewed along a radial direction.
Fig. 3 is a cross-section taken along line 3-3 in Fig. 2, illustrating a hexagonal portion according to the first exemplary embodiment of the present invention.
Fig. 4 is a perspective view illustrating a state in which a hexagonal portion according to the first exemplary embodiment of the present invention is being gripped with a spanner and screwed onto a pipe body.
Fig. 5 is a face-on view of the pipe fitting in the state of Fig. 4, as viewed along a radial direction.
Fig. 6 is a side view of the pipe fitting in the state of Fig. 4, as viewed along the axial direction.
Fig. 7 is a cross-section illustrating a deformed state of corner portions of a hexagonal portion according to the first exemplary embodiment of the present invention.
Fig. 8 is a side view of deformed corner portions of a hexagonal portion according to the first exemplary embodiment of the present invention, as viewed along the axial direction of the pipe fitting.
Fig. 9 is a cross-section illustrating a hexagonal portion according to a second exemplary embodiment of the present invention.
Fig. 10 is a half cutaway cross-section of a pipe fitting according to a third exemplary embodiment not forming part of the present invention, as viewed along a radial direction.

### DESCRIPTION OF EMBODIMENTS

### First Exemplary Embodiment

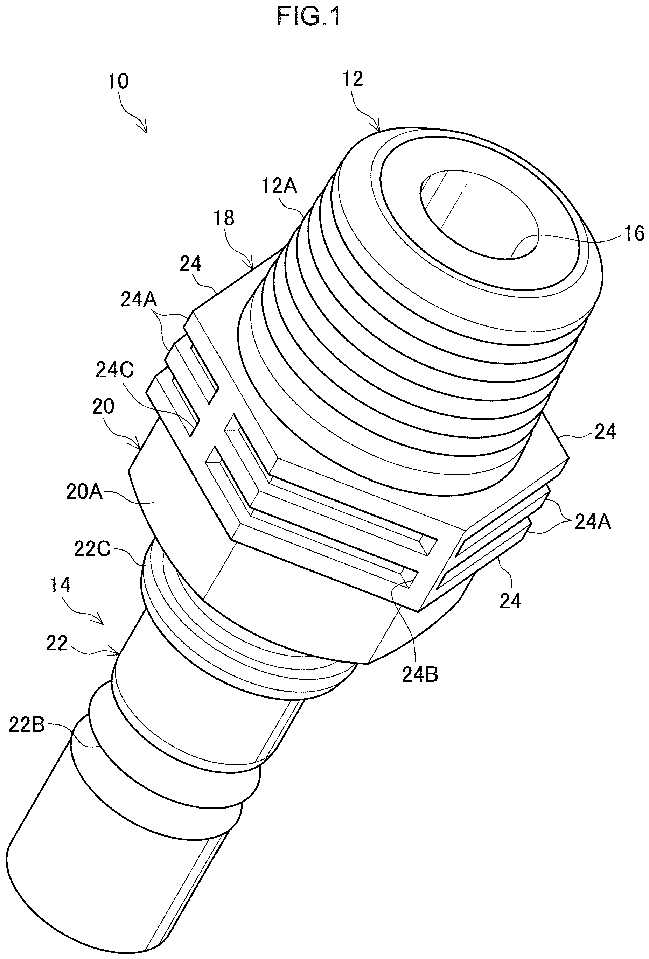

Explanation follows regarding a pipe fitting 10 according to a first exemplary embodiment of the present invention, with reference to the drawings. As illustrated in Fig. 1, the pipe fitting 10 is a fitting in which a metal tube 12 and a resin tube 14 have been integrally molded together by insert molding. A through hole 16 is formed inside the pipe fitting 10 so as to pass through the pipe fitting 10 along the axial direction, with the through hole 16 acting as the flow path for hot or cold water. Pipes of different materials can be coupled together by connecting the metal tube 12 of the pipe fitting 10, by screwing onto a metal pipe (pipe body), and by connecting the resin tube 14 to a resin pipe (pipe body).

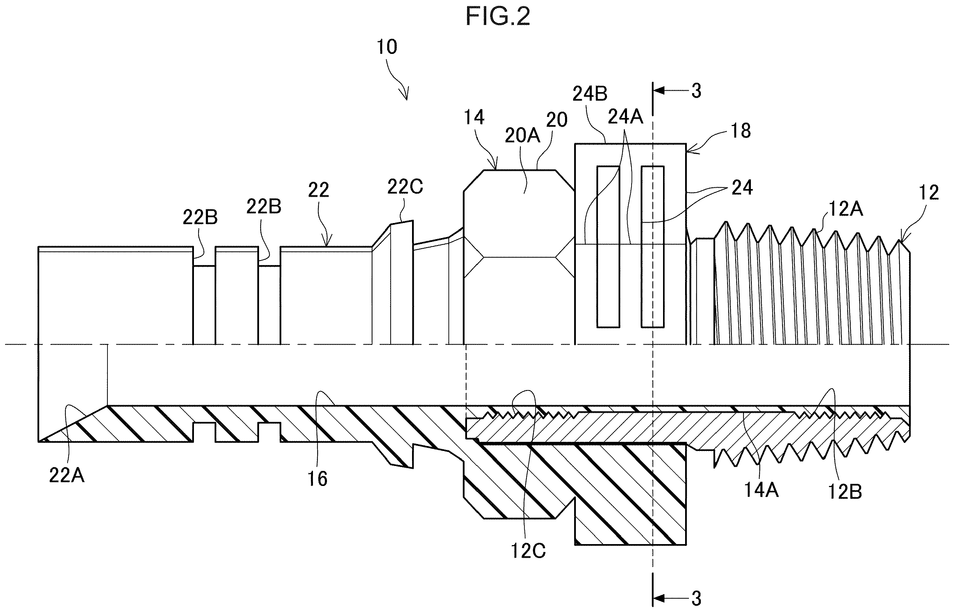

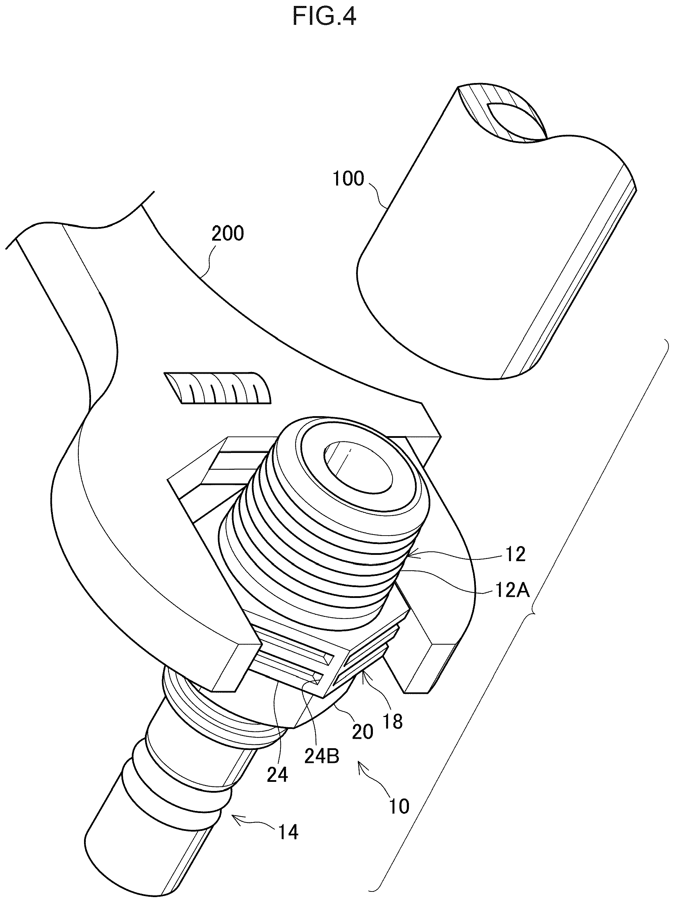

As illustrated in Fig. 2, the metal tube 12 is a tube shaped body configuring one end portion of the pipe fitting 10, and is formed from a metal having excellent anti-corrosion properties, such as stainless steel or bronze. One end portion of the metal tube 12 is covered by the resin tube 14, and the other end portion of the metal tube 12 is exposed from the resin tube 14. The outer peripheral face of the metal tube 12 exposed from the resin tube 14 is formed with a tapered shape with diminishing diameter on progression toward one end side of the pipe fitting 10, and is formed with a male thread 12A. The metal tube 12 and a metal pipe 100 are fastened together by screwing the male thread 12A into the pipe 100, and meshing the male thread 12A together with a female thread formed to the pipe 100, not illustrated in the drawings (see Fig. 4).

An extension portion 14A of thin thickness is provided to the inner peripheral face of the metal tube 12 so as to extend from the resin tube 14 along the axial direction. The extension portion 14A intrudes into two spiral shaped grooves 12B, 12C formed to the inner peripheral face of the metal tube 12, and makes close contact with the metal tube 12. A first hexagonal portion 18 and a second hexagonal portion 20, described below, make close contact with the outer peripheral face of one end portion of the metal tube 12, with the metal tube 12 interposed between the extension portion 14A, and the first hexagonal portion 18 and the second hexagonal portion 20, and integrated thereto.

Note that although there are the two spiral shaped grooves 12B, 12C formed to the inner peripheral face of the metal tube 12 in the present exemplary embodiment, there is no limitation thereto, and the spiral shaped groove 12B may be formed alone. Moreover, other than the spiral shaped grooves 12B, 12C, ring shaped groove(s) may also be formed. In the present exemplary embodiment, the two spiral shaped grooves 12B, 12C are formed, and the respective thread directions of the spiral shaped grooves 12B, 12C are set in opposite directions to each other, thereby raising the adhesion force between the extension portion 14A and the metal tube 12.

The resin tube 14 is a tube shaped body, configured with, in sequence from the metal tube 12 side, the first hexagonal portion 18, serving as a first polygonal portion, the second hexagonal portion 20, serving as a second polygonal portion, and a resin tube connection portion 22. The resin tube 14 is integrally molded from a resin having excellent heat resistance and chemical resistance, such as polyphenylene sulfide resin (PPS).

The resin tube connection portion 22 configures another end portion of the pipe fitting 10, and is the location where a resin pipe is connected, not illustrated in the drawings. An opening 22A is formed to one end portion of the resin tube connection portion 22, and the opening 22A has a tapered shape with an inner wall that increases in diameter on progression toward the one end side. This thereby enables hot or cold water flowing along a pipe and into the resin tube connection portion 22 to be guided smoothly into the pipe fitting 10.

Two ring shaped grooves 22B are formed in the outer peripheral face of an axial direction intermediate portion of the resin tube connection portion 22, and O-rings, not illustrated in the drawings, are fitted into the ring shaped grooves 22B. A ring shaped projection 22C is formed to the outer peripheral face further to the other axial direction end side than the ring shaped grooves 22B. A wall face on the opening 22A side of the ring shaped projection 22C slopes such that thickness decreases on progression toward the radial direction outside, such that, by inserting the resin tube connection portion 22 into a pipe (not illustrated in the drawings), the resin pipe (not illustrated in the drawings) can be sealed by the O-rings fitted into the ring shaped grooves 22B and by the ring shaped projection 22C.

Note that although in the present exemplary embodiment a seal is configured by directly inserting the resin tube connection portion 22 into a resin pipe, configuration may be made such that, as in the pipe fitting described in JP-A No. 2006-329225 for example, an external tube, collet, open ring, and cap are attached to the resin tube connection portion 22, enabling a pipe to be attached to, or detached from, the resin tube 14 using a one-touch operation.

The second hexagonal portion 20, serving as a torque transmission means, is formed with a hexagonal shape as viewed along the axial direction, further to the axial direction other end side than the resin tube connection portion 22. The circumscribed circle of the second hexagonal portion 20 is formed with a larger diameter than the resin tube connection portion 22, and is formed with a smaller diameter than the circumscribed circle of the first hexagonal portion 18, described later. The length (thickness) of the second hexagonal portion 20 in the axial direction is set as a length that can be gripped by a tool, such as a spanner. Although in the present exemplary embodiment it is formed with a hexagonal shape, there is no limitation thereto, and it may be formed in any polygonal shape, such as a square shape.

The first hexagonal portion 18 is formed further to the axial direction other end side than the second hexagonal portion 20, contiguously to the second hexagonal portion 20 in the axial direction. The first hexagonal portion 18 includes plural hexagonal ring shaped projections 24 provided to as to project out from the outer peripheral face of the resin tube 14, and provided at intervals from each other along the axial direction (see Fig. 1). In the present exemplary embodiment, for example, 3 of the ring shaped projections 24 are provided at even intervals along the axial direction, however there is no limitation thereto, and more of the ring shaped projections 24 may be provided. The spacing of the ring shaped projections 24 in the axial direction may be appropriately varied according to the size of the tool for gripping the first hexagonal portion 18, or the like. The wider the spacing, the easier gripping with the tool becomes.

The three ring shaped projections 24 are all formed with the same external diameter, and are formed with aligned orientation such that corner portions 24A are superimposed on each other along the axial direction. Outer peripheral end faces of the ring shaped projections 24 are formed parallel to the axial direction, and the outer peripheral end faces of the ring shaped projections 24 configure respective gripping faces that are gripped by a tool.

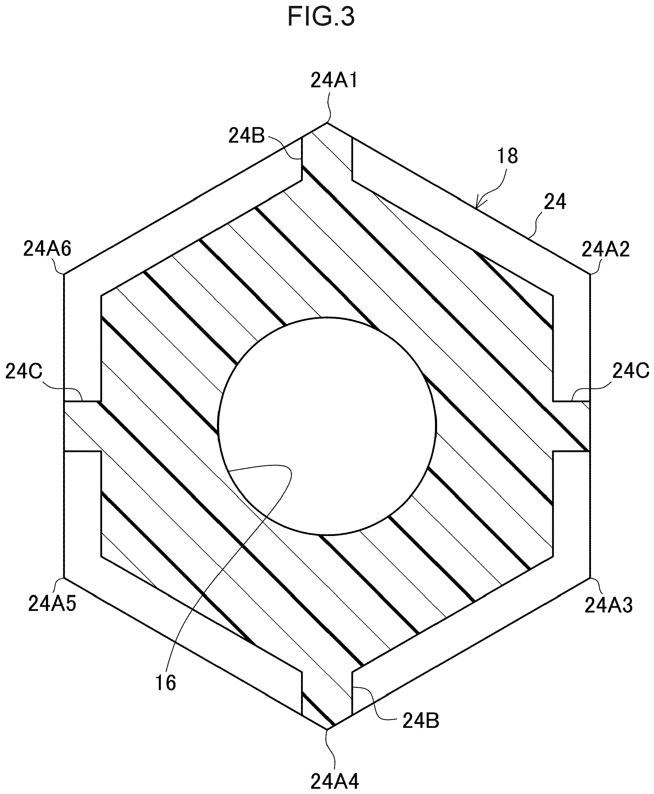

As illustrated in Fig. 1, the three ring shaped projections 24 are coupled together by ribs 24B that extend along the axial direction. The ribs 24B are integrally formed to the ring shaped projections 24, and configure part of the gripping faces. As illustrated in Fig. 3, the ribs 24B are only formed in two locations, at corner portions 24A1, 24A4, from out of six corner portions 24A1 to 24A6 of the ring shaped projections 24. Reinforcement ribs 24C are formed coupling the sides of the ring shaped projections 24 together at an intermediate portion between the corner portion 24A2 and the corner portion 24A3, and at an intermediate portion between the corner portion 24A5 and the corner portion 24A6, of the ring shaped projections 24.

As illustrated in Fig. 4, the width of the ribs 24B is formed as a width so as not to be deformed by tightening torque applied when gripping the first hexagonal portion 18 with a spanner 200 and connecting the metal tube 12 and the pipe 100 together. Moreover, the width of the ribs 24B is also designed such that, when applied with excessive torque, the ribs 24B deform before a torque to separate the metal tube 12 and the resin tube 14 from each other is reached. The tightening torque applied when connecting the metal tube 12 and the pipe 100 together is a torque set according to circumstances, such as the watertight performance required from the pipe fitting 10 and is, for example, about 30 to 40 Nm for a tapered thread of size R1/2. In the present exemplary embodiment, the ribs 24B are only formed at the two locations of the corner portion 24A1 and the corner portion 24A4 of the ring shaped projections 24, however there is no limitation thereto, and the ribs 24B may be formed at three or four of the corner portions 24A.

In cases in which, as in the present exemplary embodiment, the ribs 24B are only formed to some of the corner portions 24A, it is possible to reduce the number of sections of mold for insert molding the pipe fitting 10. Namely, in cases in which the ribs 24B are formed to all the corner portions 24A1 to 24A6, mold removal becomes difficult if gripping faces partitioned by the ribs 24B are formed using a single-piece mold, and sometimes the ribs 24B are deformed. The mold accordingly needs to be divided into six, so as to individually remove the six gripping faces from the mold. In contrast thereto, in the present exemplary embodiment, the gripping faces not partitioned at the corner portions 24A can be formed with a single mold. This thereby enables mold removal by simply splitting the mold into two parts.

Moreover, although in the present exemplary embodiment the width of the ribs 24B of the ring shaped projections 24 is varied to adjust the strength of the ribs 24B, the strength of the ribs 24B may be adjusted by changing the material of the ring shaped projections 24, without varying the widths of the ribs 24B. In such cases, there is no need to prepare a different mold to change the widths of the ribs 24B.

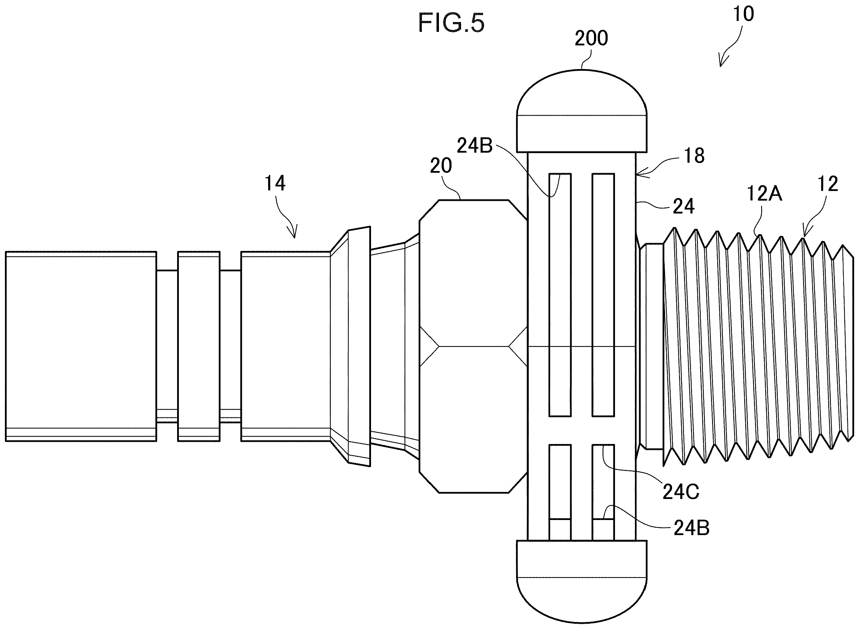

Explanation next follows regarding operation of the pipe fitting 10 according to the present exemplary embodiment. As illustrated in Fig. 4, when connecting the metal tube 12 of the pipe fitting 10 to the pipe 100, first the first hexagonal portion 18 is gripped in the spanner 200. When this is performed, as illustrated in Fig. 5, the spanner 200 does not make contact with the second hexagonal portion 20, in a state in which only the first hexagonal portion 18 is gripped.

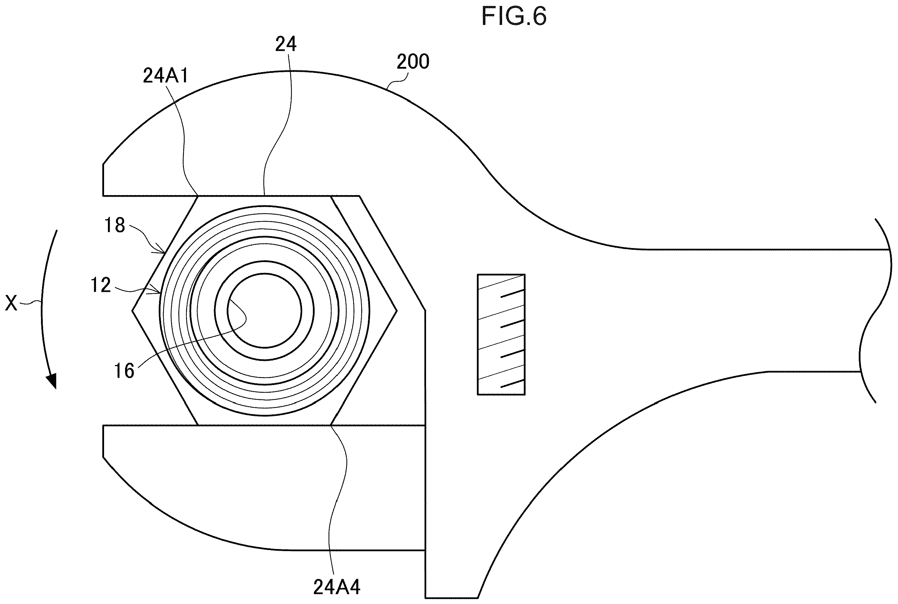

After the first hexagonal portion 18 has been gripped by the spanner 200, the male thread 12A of the metal tube 12 is aligned with the female thread of the pipe 100, and, as illustrated in Fig. 6, the spanner 200 is rotated in the arrow X direction, applying tightening torque to the first hexagonal portion 18. When gripping with the spanner 200, the corner portions 24A1, 24A4 where the ribs 24B are formed are positioned to the rotation direction (arrow X) side of the gripping faces gripped by the spanner 200.

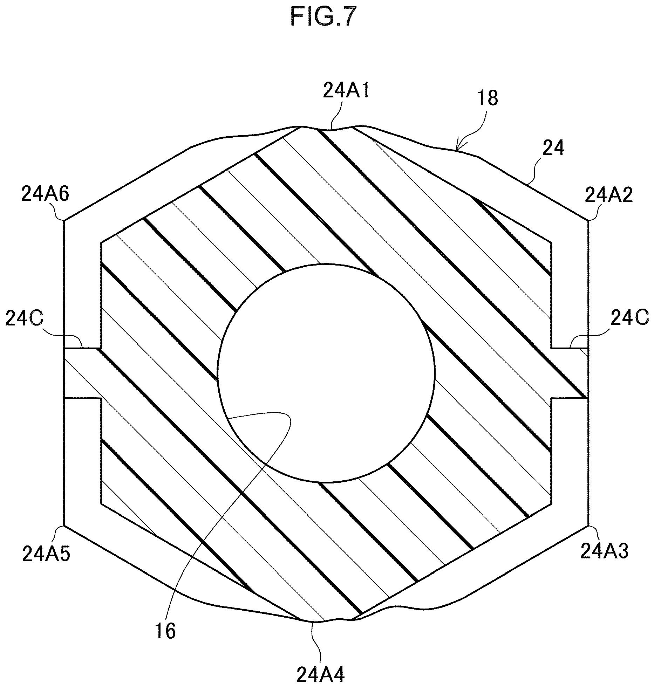

After the metal tube 12 has been screwed into the pipe 100, if the metal tube 12 is further tightened, using excessive torque, the corner portion 24A1 and the corner portion 24A4 of the ring shaped projections 24 deform, as illustrated in Fig. 7 such that the corners become rounded before a torque to separate the metal tube 12 and the resin tube 14 is reached.

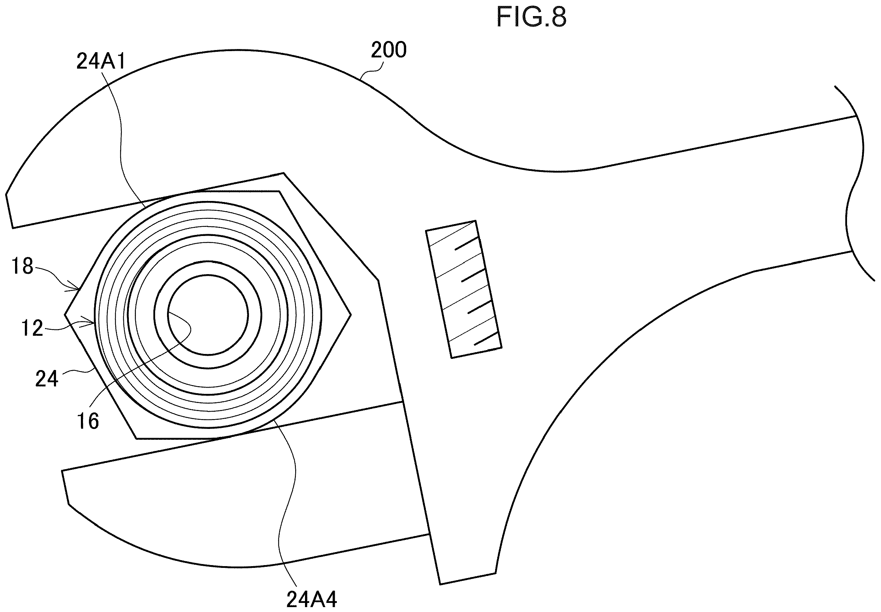

Thus, as illustrated in Fig. 8, even if an attempt is made to further tighten the metal tube 12, the spanner 200 slips on the gripping faces, such that it is difficult to transmit torque. The corner portions 24A2, 24A3, 24A5, 24A6 not formed with the ribs 24B (see Fig. 3) have a strength weaker than that of the corner portions 24A1, 24A4 formed with the ribs 24B, and deform such that the corners become rounded at a lower torque than the torque at which the ribs 24B deform. This thereby enables application of torque to separate the metal tube 12 and the resin tube 14 to be suppressed from occurring.

After the metal tube 12 has been connected to the pipe 100, pipes may be coupled together by inserting the resin tube connection portion 22 of the resin tube 14 into another pipe (not illustrated in the drawings). When this is performed, since the metal tube 12 and the resin tube 14 do not separate from each other, hot or cold water flowing inside the pipe fitting 10 can be reliably suppressed from leaking.

Then, in order to remove the pipe fitting 10 from the pipe 100 when worn out after the passage of years, or when performing a maintenance inspection, first the resin tube connection portion 22 is pulled out from the pipe. The second hexagonal portion 20 is then gripped in the spanner 200 as illustrated in Fig. 5. This thereby enables the metal tube 12 to be removed from the pipe 100 by rotating the spanner 200 in the opposite direction to the arrow X in Fig. 6.

When the corner portions 24A of the ring shaped projections 24 have not been deformed, the spanner 200 may grip the first hexagonal portion 18 to remove the metal tube 12 from the pipe 100. Moreover, although in the present exemplary embodiment the male thread 12A of the metal tube 12 is a tapered thread formed in a tapered shape, there is no limitation thereto, and a straight thread without a taper may be employed.

Moreover, although in the present exemplary embodiment the second hexagonal portion 20 is formed as a torque transmission means, other configurations may be adopted. For example, a hole may be formed in a griping face of the first hexagonal portion 18, enabling transmission of torque by attaching a bar shaped tool to the hole. In such cases, the second hexagonal portion 20 can be eliminated, suppressing operational errors by rendering it such that torque cannot be applied in a deformed state of the ribs 24B of the ring shaped projections 24 without a specialist tool.

### Second Exemplary Embodiment

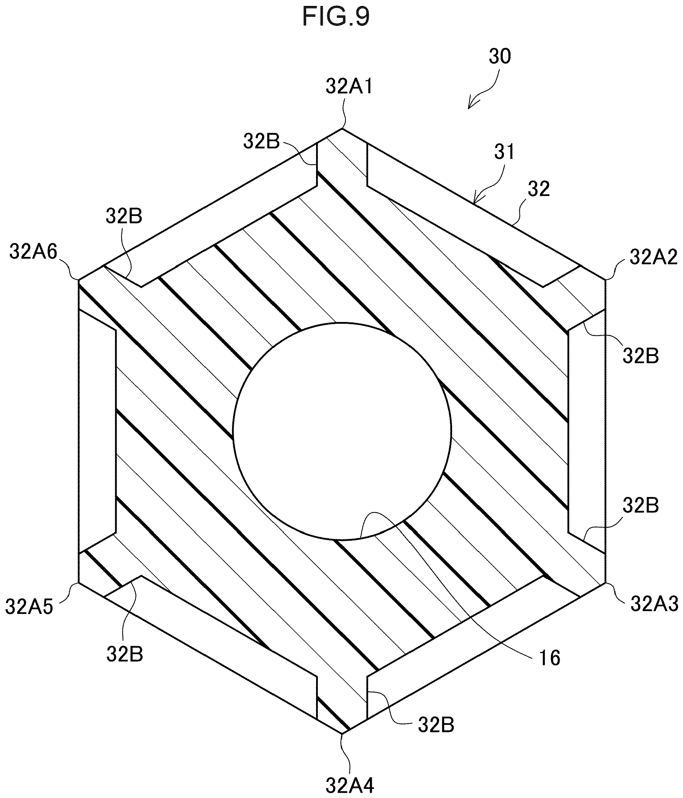

Explanation next follows regarding a pipe fitting 30 according to a second exemplary embodiment. Configuration similar to that of the first exemplary embodiment is allocated the same reference numerals, and explanation will be omitted thereof. As illustrated in Fig. 9, in the pipe fitting 30 according to the present exemplary embodiment, ribs 32B are formed to all six corner portions 32A1 to 32A6 of ring shaped projections 32 configuring a first hexagonal portion 31. Other configuration is similar to that of the first exemplary embodiment.

In the pipe fitting 30 according to the present exemplary embodiment, the ribs 32B are formed to all of the corner portions 32A1 to 32A6 of the ring shaped projection 32, enabling a uniform strength to be achieved for all the corner portions 32A1 to 32A6. There is accordingly no need to consider the position of the ribs 32B when gripping the first hexagonal portion 31 with the spanner 200.

### Third Exemplary Embodiment

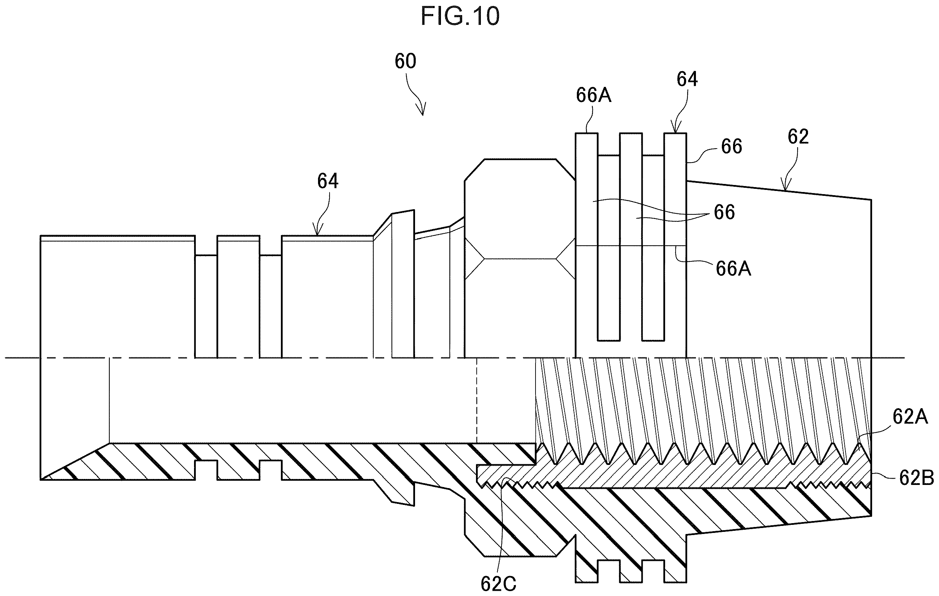

Explanation next follows regarding a pipe fitting 60 according to the third exemplary embodiment. The pipe fitting 60 shown is not according to the invention but shows features that can be used in the invention. Configuration similar to that of the first exemplary embodiment is allocated the same reference numerals, and explanation will be omitted thereof. As illustrated in Fig. 10, the pipe fitting 60 of the present exemplary embodiment is, similarly to in the first exemplary embodiment, a fitting formed by integrally molding together a metal tube 62 and a resin tube 64, for example by insert molding.

The metal tube 62 is a tube shaped body provided at one end side of the pipe fitting 60, and the outer peripheral face of the metal tube 62 is covered by a resin tube 64. The resin tube 64 surrounds two spiral shaped grooves 62B, 62C formed to the outer peripheral face of the metal tube 12, and makes close contact with the metal tube 62. A female thread 62A is formed to an inner peripheral face at one end portion of the metal tube 62. The metal tube 62 and a metal pipe 100 are connected together by meshing the female thread 62A with a male thread of a pipe by screwing the female thread 62A onto the pipe. The inner peripheral face of the other end portion of the metal tube 62 is also in close contact with the resin tube 64, and the metal tube 62 is sandwiched by the resin tube 64. Other configuration is similar to that of the first exemplary embodiment.

The pipe fitting 60 according to the present exemplary embodiment is capable of connecting to a pipe formed with a male thread. Moreover, when a first hexagonal portion 66 is applied with excessive torque when gripped by the spanner 200, corner portions 66A deform prior to reaching a torque to separate the metal tube 62 and the resin tube 64. The female portion 62A may be a tapered thread with a tapered shape.

Explanation has been given above of the first and second exemplary embodiments of the present invention as well as to the third exemplary embodiment not forming part of the invention. Various embodiments may be implemented within a range not departing from the scope of the present invention. For example, a configuration may be adopted in which a male thread or a female thread is formed to the resin tube connection portion 22 of Fig. 1, and the resin tube connection portion 22 screwed into or onto a pipe.

## Claims

1. A pipe fitting (10), comprising:
a metal tube (12) that is configured to be screwed to a pipe body (100);
a resin tube (14) including one end portion that is configured to be connectable to another pipe body (100), and another end portion that is integrally molded with the metal tube (12); and
a first polygonal portion (18) that is provided at an outer peripheral face of the resin tube (14), and that includes corner portions (24A) that deform at a lower torque than a torque that separates the metal tube (12) and the resin tube (14), wherein the first polygonal portion (18) comprises:
a plurality of hexagonal ring shaped projections (24) that project out from the outer peripheral face of the resin tube (14), that have the corner portions (24A), and are provided at intervals along an axial direction; **characterized in that**
a rib (24B) extends along the axial direction and connects the corner portions (24A) of the plurality of ring shaped projections (24).

2. The pipe fitting (10) of claim 1, wherein the rib (24B) is only formed at some of the corner portions (24A) of the ring shaped projections (24).

3. The pipe fitting (10) of claim 1 or 2, wherein a torque transmission means for transmitting torque with a tool is formed at the outer peripheral face of the resin tube (14) and separately to the first polygonal portion (18).

4. The pipe fitting (10) of claim 3, wherein the torque transmission means is a second polygonal portion (20) that is formed contiguously with the first polygonal portion (18) along the axial direction, and a diameter of a circumscribed circle of the second polygonal portion (20) is smaller than a diameter of a circumscribed circle of the first polygonal portion (18).

5. The pipe fitting (10) of any one of claim 1 to claim 4, wherein the metal tube (12) and the resin tube (14) are integrally formed by insert molding.

6. The pipe fitting (10) of any one of claim 1 to claim 5, wherein when a torque is applied to the first polygonal portion (18), opposing corner portions (24A) of the ring shaped projections (24) and the ribs (24B) connecting the opposing corner portions (24A) deform before the applied torque reaches the torque that separates the metal tube (12) and the resin tube (14).

## Patentansprüche

1. Rohrverbindung (10), umfassend:
ein Metallrohr (12), das konfiguriert ist, um mit einem Rohrkörper (100) verschraubt zu werden;
ein Harzrohr (14) mit einem Endabschnitt, der konfiguriert ist, um mit einem anderen Rohrkörper (100) verbindbar zu sein, und einem anderen Endabschnitt, der einstückig mit dem Metallrohr (12) geformt ist; und
einen ersten polygonalen Abschnitt (18), der an einer Außenumfangsfläche des Harzrohrs (14) bereitgestellt ist und der Eckabschnitte (24A) umfasst, die sich bei einem niedrigeren Drehmoment als einem Drehmoment verformen, das das Metallrohr (12) und das Harzrohr (14) voneinander trennt, wobei der erste polygonale Abschnitt (18) Folgendes umfasst:
eine Vielzahl von sechseckigen ringförmigen Vorsprüngen (24), die aus der äußeren Umfangsfläche des Harzrohrs (14) herausragen, die die Eckabschnitte (24A) aufweisen und in Abständen entlang einer axialen Richtung bereitgestellt sind; **dadurch gekennzeichnet, dass**
eine Rippe (24B) sich entlang der axialen Richtung erstreckt und die Eckabschnitte (24A) der Vielzahl von ringförmigen Vorsprüngen (24) verbindet.

2. Rohrverbindung (10) nach Anspruch 1, wobei die Rippe (24B) nur an einigen der Eckabschnitte (24A) der ringförmigen Vorsprünge (24) ausgebildet ist.

3. Rohrverbindung (10) nach Anspruch 1 oder 2, wobei ein Drehmomentübertragungsmittel zum Übertragen eines Drehmoments mit einem Werkzeug an der äußeren Umfangsfläche des Harzrohrs (14) und separat zu dem ersten polygonalen Abschnitt (18) ausgebildet ist.

4. Rohrverbindung (10) nach Anspruch 3, wobei das Drehmomentübertragungsmittel ein zweiter polygonaler Abschnitt (20) ist, der an den ersten polygonalen Abschnitt (18) entlang der axialen Richtung angrenzend ausgebildet ist, und ein Durchmesser eines umschriebenen Kreises des zweiten polygonalen Abschnitts (20) kleiner ist als ein Durchmesser eines umschriebenen Kreises des ersten polygonalen Abschnitts (18).

5. Rohrverbindung (10) nach einem der Ansprüche 1 bis 4, wobei das Metallrohr (12) und das Harzrohr (14) einstückig durch Umspritzen geformt sind.

6. Rohrverbindung (10) nach einem der Ansprüche 1 bis 5, wobei sich, wenn auf den ersten polygonalen Abschnitt (18) ein Drehmoment ausgeübt wird, gegenüberliegende Eckabschnitte (24A) der ringförmigen Vorsprünge (24) und der Rippen (24B), die die gegenüberliegenden Eckabschnitte (24A) verbinden, verformen, bevor das aufgebrachte Drehmoment das Drehmoment erreicht, das das Metallrohr (12) und das Harzrohr (14) trennt.

## Revendications

1. Raccord de tuyau (10), comprenant :
un tube en métal (12) configuré pour être vissé à un corps de tuyau (100) ;
un tube en résine (14) incluant une partie d'extrémité configurée pour pouvoir être reliée à un autre corps de tuyau (100), et une autre partie d'extrémité qui est intégralement moulée avec le tube en métal (12) ; et
une première partie polygonale (18) fournie au niveau d'une surface périphérique externe du tube de résine (14), et incluant des parties de coins (24A) qui se déforment sous un couple inférieur à un couple qui sépare le tube de métal (12) et le tube de résine (14), dans lequel la première partie polygonale (18) comprend :
une pluralité de saillies en forme d'anneaux hexagonaux (24) qui font saillie hors de la surface périphérique externe du tube de résine (14), qui comportent les parties de coins (24A), et sont fournies à des intervalles le long d'une direction axiale ; **caractérisé en ce que**
une nervure (24B) s'étend le long de la direction axiale et relie les parties de coins (24A) de la pluralité de saillies en forme d'anneaux (24).

2. Raccord de tuyau (10) selon la revendication 1, dans lequel la nervure (24B) n'est formée qu'au niveau de certaines parties de coins (24A) des saillies en forme d'anneaux (24).

3. Raccord de tuyau (10) selon la revendication 1 ou 2, dans lequel le moyen de transmission de couple avec un outil est formé au niveau de la surface périphérique externe du tube de résine (14) et séparément de la première partie polygonale (18).

4. Raccord de tuyau (10) selon la revendication 3, dans lequel le moyen de transmission de couple est une deuxième partie polygonale (20) formée de manière contigüe à la première partie polygonale (18) le long de la direction axiale, et un diamètre d'un cercle circonscrit de la deuxième partie polygonale (20) est inférieur à un diamètre d'un cercle circonscrit de la première partie polygonale (18).

5. Raccord de tuyau (10) selon l'une quelconque des revendications 1 à 4, dans lequel le tube de métal (12) et le tube de résine (14) sont formés intégralement par moulage d'insert.

6. Raccord de tuyau (10) selon l'une quelconque des revendications 1 à 5, dans lequel, lorsqu'un couple est appliqué à la première partie polygonale (18), les parties de coins opposées (24A) des saillies en forme d'anneaux (24) et les nervures (24B) reliant les parties de coins opposées (24A) se déforment avant que le couple appliqué n'atteigne le couple qui sépare le tube de métal (12) et le tube de résine (14).
